# FASCICULE DE BREVET EUROPEEN

(11) **EP 2 115 328 B1**
(45) Date de publication et mention de la délivrance du brevet: **12.01.2011**
(21) Numéro de dépôt: 08762170.2
(22) Date de dépôt: 28.02.2008
(51) Int. Cl.: F16H 59/02, B60K 20/02

(54) **AGENCEMENT POUR LA FIXATION D'UNE BASE DE GARNITURE DE LEVIER DE VITESSE SUR LA PERIPHERIE D'UN HABILLAGE ENVIRONNANT**
ANORDNUNG ZUR SICHERUNG EINES GETRIEBEHEBELSOCKELS AM RAND EINER DIESEN UMGEBENDEN ABDECKUNG
ARRANGEMENT FOR SECURING A GEARSHIFT LEVER TRIM BASE TO THE PERIPHERY OF A SURROUNDING COVERING

(30) Priorité: 05.03.2007 FR 0753647
(43) Date de publication de la demande: 11.11.2009
(73) Titulaire: Renault S.A.S., 92100 Boulogne-Billancourt (FR)
(72) Inventeur: CZEPCZAK, Raphael, F-91120 Palaiseau (FR); CHHEANG, Nakry, F-78470 Saint Remy Les Chevreuse (FR)
(86) Numéro de dépôt international: PCT/FR2008/050335
(87) Numéro de publication internationale: WO 2008/119907

(56) Documents cités:
- JP-A- 2000 229 524
- JP-U- 1 116 736
- JP-U- 2 149 321

## Description

La présente invention concerne un agencement pour la fixation d'une base de garniture de levier de vitesse sur la périphérie d'un habillage environnant, qui comporte des moyens de guidage sur une face inférieure dudit habillage, aptes à positionner la base de la garniture, par l'engagement de ces moyens de guidage dans des orifices correspondants formés à la base de la garniture, ladite base étant plaquée contre cette face inférieure par un cerclage présentant des orifices au travers desquels s'engagent les moyens de guidage.

Le levier de vitesse qui peut être actionné par le conducteur d'un véhicule automobile est monté articulé, en saillie d'un boîtier de commande. Ce boîtier est généralement monté sur un plancher de l'habitacle du véhicule, dans un logement formé dans une partie d'un habillage environnant.

Une garniture vient alors recouvrir le logement, afin de masquer le boîtier de commande et d'éviter l'introduction de particules de faible taille et/ou de poussières. Cette garniture a aussi une fonction de réduction de bruit dans l'habitacle puisqu'elle permet de limiter la remontée de bruits provenant du compartiment moteur par la tringlerie de boîte de vitesse.

Généralement, cette garniture flexible présente une forme tronconique et est fixée, à son sommet, au levier de vitesse, et à sa base, à la périphérie supérieure du logement formé dans la partie d'habillage environnant, la garniture permettant ainsi au levier de pivoter librement dans toutes les directions pour que le conducteur puisse changer de rapport de boîte. Des exemples de réalisation sont par exemple décrit dans les documents JP61046721.

Cependant, outre l'inconvénient de présenter des rainures qui peuvent piéger des poussières et autres particules et poser un problème d'hygiène, un tel sous-ensemble fait appel à des moyens de fixation saillants. La présence de ces moyens de fixation sur la portion supérieure de la partie d'habillage environnant, présentent des problèmes de confort et d'ergonomie. De plus, en raison des contraintes d'arrachement supportées par la garniture lors de l'action du conducteur sur le levier, le plaquage de la garniture sur la partie d'habillage environnant diminue dans le temps, ce qui induit des problèmes d'étanchéité.

Des systèmes solutionnent une partie de ces problèmes mais au prix d'une complexité supérieure et d'un coût élevé. C'est le cas notamment du sous-ensemble proposé dans le document JP2003104081, dans lequel on fixe d'abord la base de la garniture dans une rainure formée sur périphérie supérieure du logement, par des moyens de fixation saillants. On recouvre ensuite cette rainure par un cerclage ayant une forme complémentaire de la rainure afin de recouvrir et masquer les moyens de fixation. La publication JP01 1167364 divulgue un agencement d'après le preambule de la revendication 1.

Le but de la présente invention est d'apporter des améliorations à de tels sous-ensembles afin d'assurer un meilleur confort et une ergonomie améliorée pour les occupants du véhicule automobile, en fixant une garniture flexible par des moyens de fixation non saillants, afin de préserver notamment le boîtier de commande des particules qui pourraient en grever le fonctionnement.

Plus particulièrement, on propose un sous-ensemble du type précité dans lequel le cerclage et/ou les moyens de guidage sont disposés dans le logement sous la face inférieure de l'habillage environnant.

Selon d'autres caractéristiques avantageuses de l'invention qui peuvent être prises séparément ou en combinaison :
- une extrémité d'au moins une partie des moyens de guidage, comporte une déformation qui augmente la section desdits moyens à une dimension sensiblement supérieure à celle des orifices formés dans le cerclage en vue de conférer à ces moyens de guidage une fonction de fixation ;
- le cerclage comporte un retour vers le haut au voisinage d'une arête de l'habillage environnant délimitant l'ouverture qui y est formé ;
- des traitements et/ou états de surface sont réalisés sur au moins l'un parmi la face inférieure de l'habillage environnant, une face supérieure du cerclage, et la base de la garniture;
- la déformation de l'extrémité des moyens de guidage est obtenue par un déformation à chaud et/ou à l'aide d'ultrasons ;
- les moyens de guidage sont placés à la périphérie du logement de manière à constituer des moyens de détrompage;
- les moyens de guidage à la périphérie du logement et les orifices correspondants de la base de la garniture sont disposés de manière à obtenir une tension sensiblement constante de la garniture.

L'invention concerne également un procédé d'assemblage d'un agencement selon l'invention comportant successivement :
a) une première étape au cours de laquelle on positionne la base de la garniture contre la face inférieure de l'habillage environnant en engageant les moyens de guidage dans les orifices correspondants préalablement formés dans la base de la garniture;
b) dans une deuxième étape, on place le cerclage sous la base de la garniture positionnée sous la face inférieure de l'habillage environnant en engageant les moyens de guidage au travers des orifices correspondants préalablement formés dans le cerclage, en appliquant une pression de maintien ;
c) et dans d'une troisième étape, on vient déformer l'extrémité inférieure des moyens de guidage de manière à augmenter leur section à une valeur supérieure à la dimension des orifices formés dans le cerclage et on relâche la pression de maintien lorsque la déformation des pions est définitive.

L'invention sera désormais décrite par un exemple en référence au dessin annexé suivant :
- La figure 1 est une section selon un plan vertical passant par l'axe du levier de vitesse, d'un boîtier de commande logé dans un logement formé dans un élément d'habillage environnant, rendu étanche par une garniture selon l'invention;
- La figure 2 est une section, du sous-ensemble permettant la fixation d'une garniture à la périphérie d'un logement formé dans un élément d'habillage environnant.

Dans la description qui va suivre, on prendra comme référence l'axe [L-L] formé par le levier de vitesse qui s'étend sensiblement verticalement entre une partie basse, ou inférieure, montée sur un boîtier de commande et une partie haute, ou supérieure, côté pommeau de levier de vitesse par lequel le conducteur le manipule.

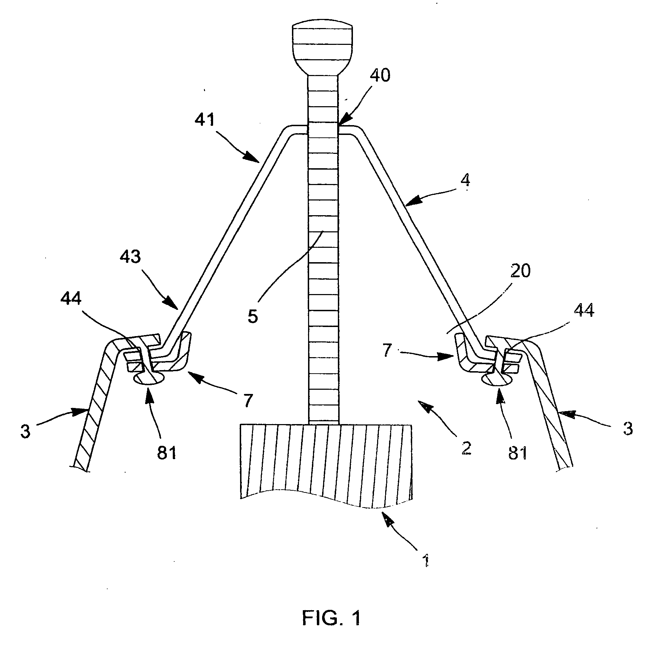

Comme représenté à la figure 1, un boîtier de commande 1 de boîte de vitesse est disposé dans un logement 2 réalisé dans un habillage environnant 3. L'habillage environnant 3 peut alors être fixé sur une partie rigide de l'habitacle ou sur une partie de console d'habitacle du véhicule automobile.

Un levier de vitesse 5 est monté à pivotement sur ce boîtier 1, et fait saillie au travers d'un ouverture 20 formée dans l'habillage 3, de manière à pouvoir être actionné par le conducteur du véhicule automobile dans le but d'effectuer des changements de rapport de la boîte de vitesse.

Une garniture 4 obture l'ouverture 20 réalisée dans l'habillage 3 le logement 2 et s'étend entre l'habillage environnant 3 et la partie supérieure du levier 5 de manière à créer un enveloppement au moins partiel de ce dernier. En outre, la garniture 4 permet d'isoler parfaitement le boîtier vis-à-vis de l'extérieur par rapport aux particules et/ou des poussières.

En partie supérieure 41, la garniture 4 est percée d'une ouverture supérieure 40 pour permettre le passage du levier 5. Pour la fixation de la garniture 4 à la partie supérieure du levier de vitesse 5, on utilise des moyens de fixation supérieurs classiques (non représentés) tels que des colliers de fixation, des bandeaux élastiques ou des dispositifs de clippage.

Selon le mode de réalisation représenté sur les figures, la garniture 4 présente, en partie inférieure 43, une ouverture d'un diamètre légèrement supérieur au diamètre du logement 2.

Plus généralement, on dénommera, de « base », dans la suite de la description, la partie inférieure 43 de la garniture 4 qui est fixée à l'habillage environnant 3.

Les moyens de fixation inférieurs 8 traversant la garniture 4, sont disposés sur une face inférieure 31 de l'habillage environnant 3 qui forme la délimitation de l'ouverture 20.

Selon l'invention, la garniture 4 est plaquée contre la face inférieure 31 de l'habillage environnant 3 par un cerclage 7, la garniture 4 étant alors prise en étau et pincée entre ce cerclage 7 et la face inférieure de l'habillage 3.

Cette disposition des moyens de fixation est particulièrement avantageuse, en effet, les moyens de fixation présentent des saillies qui s'étendent vers le bas, dans le logement 2 si bien qu'elles ne sont pas accessibles par l'occupant lorsque la garniture 4 est en place dans le véhicule.

De plus, contrairement à des moyens de fixation disposés sur la partie supérieure de l'habillage 3, pour lesquels les efforts d'arrachement de la garniture 4 lors du mouvement du levier de vitesse se localisent autour desdits moyens de fixation, selon l'invention, grâce à ces moyens de fixation inférieurs, les efforts se répartissent sur la surface de recouvrement du cerclage 7 et de l'habillage environnant 3.

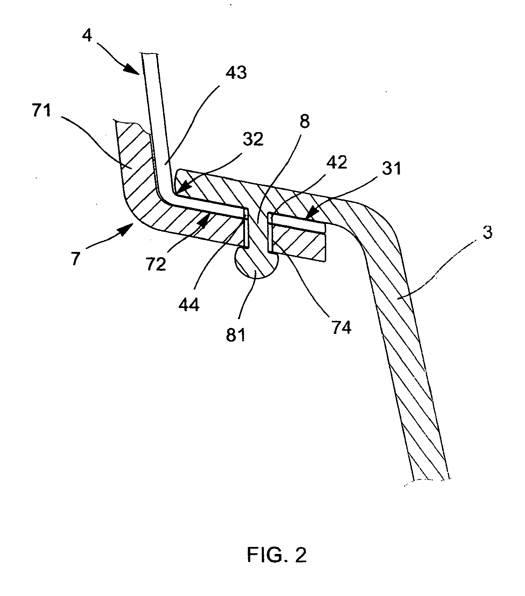

La figure 2 détaille l'agencement permettant la fixation de la base de la garniture 4 sur l'habillage environnant 3 et plus particulièrement la constitution des moyens de fixation inférieurs selon l'invention, en agrandissant une portion de la coupe de la figure 1.

Des moyens de guidage, tels que des pions 8, sont formés, et de préférence venus de moulage, sur la face inférieure 31 de l'habillage environnant 3, à la périphérie de l'ouverture 20 pour y chausser la garniture 4 en y engageant les pions 8 dans des orifices correspondants 44.

Le cerclage 7 est également pourvu d'orifices 74 disposés en correspondance des pions 8, et est appliqué contre la garniture 4 chaussée sur l'habillage environnant 3, pour en assurer le plaquage et le maintien.

Selon l'invention, au moins certains pions 8 sont déformés une fois qu'ils sont engagés au travers de la garniture 4 et du cerclage 7, de manière à accroître leur section à leur extrémité. Les pions 8 ainsi déformés constituent alors des moyens de fixation du cerclage 7 et de la garniture 4 contre l'habillage environnant 3.

La déformation de pions 8 peut être obtenue thermiquement ou par soudage à ultrasons notamment à l'aide d'une sonotrode.

Lors de la déformation, et pour améliorer la tenue, on peut créer un soudage du pion sur le cerclage.

Le nombre et la position des pions 8 qui présentent la double fonction de guidage et de fixation sont un compromis entre la complexité et la durée de l'assemblage de l'agencement de fixation et l'endurance de l'étanchéité dans le temps.

De préférence, les pions 8 sont réalisés dans une matière qu'il est possible de déformer à chaud.

Pour augmenter les dimensions de la section des pions 8, on peut notamment utiliser un procédé de boutrollage.

Selon la variante de réalisation représentée à la figure 2, le cerclage 7 présente un retour 71 vers le haut au voisinage d'une arête 32 délimitant l'ouverture 20 formé dans l'habillage environnant 3 pour augmenter la rigidité de l'agencement au niveau de cette arête 32, et plus particulièrement empêcher l'affaissement de la garniture 4. Ce retour permet aussi d'éviter à des poussières et autres particules de venir se glisser entre la garniture 4 et l'habillage environnant 3, au niveau de cette arête 32. On se prémuni ainsi d'usures de la base 43 de la garniture 4 par des frottements dues à la présence de particules abrasives.

La disposition de ces pions 8 est adaptée pour optimiser la répartition des efforts d'arrachements de la garniture 4 à sa base en fonction de la forme de la périphérie du logement 2.

En disposant les pions 8 non uniformément autour de la périphérie du logement 2, ces pions 8 peuvent constituer des moyens de détrompage, dans le cas où l'ouverture n'est pas complètement symétrique.

De plus, on adapte la disposition des moyens de guidage 8 à la périphérie du logement 2 et des orifices correspondant de la base de la garniture 4 de manière à obtenir une tension sensiblement constante de la garniture 4.

Selon une variante de réalisation, des traitements de surface sont réalisés sur au moins l'un parmi la face inférieure 31 de l'habillage environnant 3, la face supérieure du cerclage 7, et la base de la garniture 4. Ces traitements de surface vise à améliorer l'adhérence entre ces divers éléments et limiter l'arrachement de la garniture 4.

On peut aussi réalisé un état de surface sur au moins l'un parmi la face inférieure 31 de l'habillage environnant 3, la face supérieure du cerclage 7, et la base de la garniture 4, comme des stries ou autres aspérités.

Dans cette configuration, un procédé d'assemblage d'un agencement 10 du type de celui décrit précédemment comporte une première étape au cours de laquelle on positionne la base de la garniture 4 contre la face inférieure 31 de l'habillage environnant 3 en engageant les moyens de guidage 8 dans les orifices correspondants 44 préalablement formés dans la base de la garniture 4.

Puis au cours d'une deuxième étape, on place le cerclage 7 sous la base de la garniture 4 positionnée sous la face inférieure 31 de l'habillage environnant 3 en engageant les moyens de guidage 8 au travers des orifices correspondants 74 préalablement formés dans le cerclage 7, en appliquant une pression de maintien.

Puis au cours d'une troisième étape, on vient déformer l'extrémité inférieure 81 des moyens de guidage 8 de manière à augmenter leur section à une valeur supérieure à la dimension des orifices 74 formés dans le cerclage 7. On relâche alors la pression de maintien lorsque la déformation des pions est définitive, par exemple après refroidissement.

De préférence, la déformation est réalisée de telle manière que le cerclage 7 est fixé dans la position dans laquelle on maintenait les éléments de l'agencement, positionnés dans les deux premières étapes, de manière à éviter des jeux entre l'habillage environnant 3, la base de la garniture 4 et le cerclage 7.

Cette troisième étape pourra avantageusement être réalisée par une déformation à chaud, par exemple par un procédé de boutrollage.

L'invention permet donc de fixer la base de la garniture 4 d'étanchéité du logement 2 dans lequel est disposé le boîtier 1 de commande de levier de vitesse 5, tout en masquant les moyens de fixation qui permettent de la maintenir contre l'habillage environnant 3.

## Revendications

1. Agencement pour la fixation d'une base de garniture (43) de levier de vitesse (5) sur la périphérie d'un habillage environnant (3), agencement comportant une base de garniture (43), un habillage environnant (3) et des moyens de guidage (8) sur une face inférieure (31) dudit habillage (3), lesdits moyens de guidage étant aptes à positionner la base de la garniture (43), par l'engagement de ces moyens de guidage (8) dans des orifices correspondants (44) formés à la base de la garniture (43), ladite base (43) étant plaquée contre cette face inférieure (31) et les moyens de guidage (8) étant disposés dans le logement (2) sous la face inférieure (31) de l'habillage environnant (3), **caractérisé en ce que** l'agencement comporte en outre un cerclage (7) présentant des orifices (74) au travers desquels s'engagent les moyens de guidage (8).

2. Agencement selon la revendication précédente **caractérisé en ce qu'**une extrémité (81) d'au moins une partie des moyens de guidage (8), comporte une déformation qui augmente la section desdits moyens (8) à une dimension sensiblement supérieure à celle des orifices (74) formés dans le cerclage (7) en vue de conférer à ces moyens de guidage (8) une fonction de fixation.

3. Agencement selon la revendication 1 **caractérisé en ce que** le cerclage (7) comporte un retour (71) vers le haut au voisinage d'une arête (32) de l'habillage environnant (3) délimitant l'ouverture (20) qui y est formé.

4. Agencement selon l'une des revendications précédentes **caractérisé en ce que** des traitements et/ou états de surface sont réalisés sur au moins l'un parmi la face inférieure (31) de l'habillage environnant (3), une face supérieure (72) du cerclage (7), et la base de la garniture (43).

5. Agencement selon l'une des revendications précédentes **caractérisé en ce que** la déformation de l'extrémité (81) des moyens de guidage (8) est obtenue par un déformation à chaud et/ou à l'aide d'ultrasons.

6. Agencement selon l'une des revendications précédentes **caractérisé en ce que** les moyens de guidage (8) sont placés à la périphérie du logement (2) de manière à constituer des moyens de détrompage.

7. Agencement selon l'une des revendications précédentes **caractérisé en ce que** les moyens de guidage (8) à la périphérie du logement (2) et les orifices correspondants (44) de la base (43) de la garniture (4) sont disposés de manière à obtenir une tension sensiblement constante de la garniture (4).

8. Procédé d'assemblage d'un agencement, selon l'une des revendications précédentes **caractérisé en ce qu'**il comporte successivement :
a) une première étape au cours de laquelle on positionne la base (43) de la garniture (4) contre la face inférieure (31) de l'habillage environnant (3) en engageant les moyens de guidage (8) dans les orifices correspondants (44) préalablement formés dans la base de la garniture (4);
b) dans une deuxième étape, on place le cerclage (7) sous la base (43) de la garniture (4) positionnée sous la face inférieure (31) de l'habillage environnant (3) en engageant les moyens de guidage (8) au travers des orifices correspondants (74) préalablement formés dans le cerclage (7), en appliquant une pression de maintien ;
c) et dans d'une troisième étape, on vient déformer l'extrémité inférieure (81) des moyens de guidage (8) de manière à augmenter leur section à une valeur supérieure à la dimension des orifices (74) formés dans le cerclage (7) et on relâche la pression de maintien lorsque la déformation des pions est définitive.

## Claims

1. Arrangement for securing the base of a gaiter (43) of a gearshift lever (5) to the periphery of a surrounding interior trim (3), which arrangement comprises a gaiter base (43), a surrounding interior trim (3) and guide means (8) on an underside (31) of said interior trim (3), said guide means being capable of positioning the base of the gaiter (43) by engagement of these guide means (8) in corresponding holes (44) formed at the base of the gaiter (43), said base (43) being pressed firmly against this underside (31) and the guide means (8) being positioned in the housing (2) under the underside (31) of the surrounding interior trim (3), **characterized in that** the arrangement further comprises a band (7) that has holes (74) through which the guide means (8) engage.

2. Arrangement according to the preceding claim, **characterized in that** one end (81) of at least one part of the guide means (8) has a deformation which increases the cross section of said means (8) to a dimension substantially greater than that of the holes (74) formed in the band (7) so as to give these guide means (8) a securing function.

3. Arrangement according to Claim 1, **characterized in that** the band (7) comprises an upstand (71) near an edge (32) of the surrounding interior trim (3) delimiting the opening (20) formed therein.

4. Arrangement according to one of the preceding claims, **characterized in that** surface treatments and/or surface finishes are performed and/or created on at least one of the following: the underside (31) of the surrounding interior trim (3); an upper face (72) of the band (7); and the base of the gaiter (43).

5. Arrangement according to one of the preceding claims, **characterized in that** the deformation of the end (81) of the guide means (8) is obtained by deforming in the hot state and/or with the aid of ultrasound.

6. Arrangement according to one of the preceding claims, **characterized in that** the guide means (8) are positioned at the periphery of the housing (2) in such as way as to constitute polarizing means.

7. Arrangement according to one of the preceding claims, **characterized in that** the guide means (8) at the periphery of the housing (2) and the corresponding holes (44) in the base (43) of the gaiter (4) are positioned in such a way as to obtain a substantially constant tension in the gaiter (4).

8. Method of assembling an arrangement according to one of the preceding claims, **characterized in that** it comprises, in succession:
a) a first step during which the base (43) of the gaiter (4) is positioned against the underside (31) of the surrounding interior trim (3) by engaging the guide means (8) in the corresponding holes (44) already formed in the base of the gaiter (4);
b) in a second step, the band (7) is positioned under the base (43) of the gaiter (4) positioned under the underside (31) of the surrounding interior trim (3) by engaging the guide means (8) through the corresponding holes (74) already formed in the band (7), and applying a retaining pressure;
c) and in a third step, the lower end (81) of the guide means (8) is deformed in such a way as to increase its cross section to a value greater than the size of the holes (74) formed in the band (7) and the retaining pressure is released when the deformation of the stakes is permanent.

## Patentansprüche

1. Anordnung zur Befestigung eines Manschettenfußes (43) eines Gangschalthebels (5) am Umfang einer umgebenden Verkleidung (3), Anordnung, die einen Manschettenfuß (43), eine umgebende Verkleidung (3) und Führungseinrichtungen (8) auf einer Unterseite (31) der Verkleidung (3) aufweist, wobei die Führungseinrichtungen den Fuß (43) der Manschette durch Einführen dieser Führungseinrichtungen (8) in entsprechende Öffnungen (44) positionieren, die am Fuß (43) der Manschette geformt sind, wobei der Fuß (43) gegen diese Unterseite (31) gedrückt wird und die Führungseinrichtungen (8) in der Aufnahme (2) unter der Unterseite (31) der umgebenden Verkleidung (3) angeordnet sind, **dadurch gekennzeichnet, dass** die Anordnung außerdem eine Umreifung (7) aufweist, die Öffnungen (74) hat, durch die hindurch die Führungseinrichtungen (8) eingeführt werden.

2. Anordnung nach dem vorhergehenden Anspruch, **dadurch gekennzeichnet, dass** ein Ende (81) mindestens eines Teils der Führungseinrichtungen (8) eine Verformung aufweist, die den Querschnitt der Einrichtungen (8) auf eine Abmessung deutlich größer als diejenige der Öffnungen (74) erhöht, die in der Umreifung (7) geformt sind, um diesen Führungseinrichtungen (8) eine Befestigungsfunktion zu verleihen.

3. Anordnung nach Anspruch 1, **dadurch gekennzeichnet, dass** die Umreifung (7) in der Nähe einer Kante (32) der umgebenden Verkleidung (3) einen Umschlag (71) nach oben aufweist, der die Öffnung (20) begrenzt, die dort geformt ist.

4. Anordnung nach einem der vorhergehenden Ansprüche, **dadurch gekennzeichnet, dass** Verarbeitungen und/oder Oberflächenzustände auf mindestens einer, der Unterseite (31) der umgebenden Verkleidung (3), einer Oberseite (72) der Umreifung (7), oder dem Fuß (43) der Manschette (43) realisiert werden.

5. Anordnung nach einem der vorhergehenden Ansprüche, **dadurch gekennzeichnet, dass** die Verformung des Endes (81) der Führungseinrichtungen (8) durch eine Warmverformung und/oder mit Hilfe von Ultraschall erhalten wird.

6. Anordnung nach einem der vorhergehenden Ansprüche, **dadurch gekennzeichnet, dass** die Führungseinrichtungen (8) am Umfang der Aufnahme (2) angeordnet sind, um Unverwechselbarkeitseinrichtungen zu bilden.

7. Anordnung nach einem der vorhergehenden Ansprüche, **dadurch gekennzeichnet, dass** die Führungseinrichtungen (8) am Umfang der Aufnahme (2) und die entsprechenden Öffnungen (44) des Fußes (43) der Manschette (4) so angeordnet sind, dass eine im Wesentlichen konstante Spannung der Manschette (4) erhalten wird.

8. Verfahren zum Zusammenbau einer Anordnung nach einem der vorhergehenden Ansprüche, **dadurch gekennzeichnet, dass** es nacheinander aufweist:
a) einen ersten Schritt, während dem der Fuß (43) der Manschette (4) gegen die Unterseite (31) der umgebenden Verkleidung (3) positioniert wird, indem die Führungseinrichtungen (8) in die entsprechenden Öffnungen (44) eingeführt werden, die vorher im Fuß der Manschette (4) geformt werden;
b) in einem zweiten Schritt die Umreifung (7) unter dem Fuß (43) der Manschette (4) angeordnet wird, der unter der Unterseite (31) der umgebenden Verkleidung (3) positioniert ist, indem die Führungseinrichtungen (8) durch entsprechende Öffnungen (74) eingeführt werden, die vorher in der Umreifung (7) geformt werden, indem ein Haltedruck ausgeübt wird;
c) und in einem dritten Schritt das untere Ende (81) der Führungseinrichtungen (8) verformt wird, um ihren Querschnitt auf einen höheren Wert als die Abmessung der Öffnungen (74) zu erhöhen, die in der Umreifung (7) geformt sind, und der Haltedruck gelöst wird, wenn die Verformung der Klötze endgültig ist.
